# EUROPÄISCHE PATENTSCHRIFT

(11) **EP 2 063 199 B1**
(45) Veröffentlichungstag und Bekanntmachung des Hinweises auf die Patenterteilung: **30.05.2012**
(21) Anmeldenummer: 08018443.5
(22) Anmeldetag: 22.10.2008
(51) Int. Cl.: F24J 2/52, E04D 5/12, H01L 31/048

(54) **Anordnung bestehend aus einer Befestigungsunterlage mit Photovoltaikmodulen**
Arrangement consisting of an attachment underlay with photovoltaic modules
Arrangement d'un support de fixation avec modules photovoltaïques

(30) Priorität: 23.11.2007 DE 102007056619
(43) Veröffentlichungstag der Anmeldung: 27.05.2009
(73) Patentinhaber: BELECTRIC Trading GmbH, 97509 Kolitzheim (DE)
(72) Erfinder: Beck, Bernhard, 97332 Volkach OT Dimbach (DE)
(74) Vertreter: FDST Patentanwälte

(56) Entgegenhaltungen:
- WO-A-2008/063660
- DE-A1- 10 329 184
- DE-U1-202007 007 207
- US-A1- 2003 094 193

## Beschreibung

Die Erfindung bezieht sich auf eine Anordnung, bestehend aus einer Befestigungsunterlage mit mehreren an ihr befestigten, Jeweils mindestens eine Glasscheibe aufweisenden Photovoltaikmodulen.

Zurzeit sind zwei Vorgehensweisen zur Bestückung eines Flachdaches mit einer Sonnenkollektoranlage üblich.

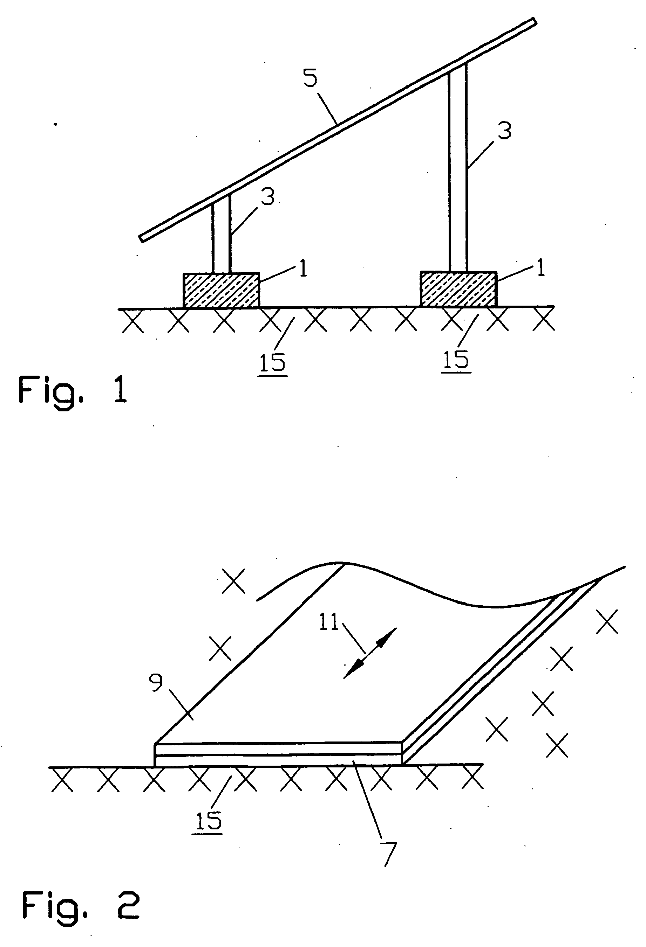

Die erste Vorgehensweise benützt Photovoltaik- oder Solarmodule in Glasbautechnik, die in aller Regel in einer Mehrzahl nebeneinander angeordnet sind. Diese Module sind ebene tafelförmige Gebilde in Form rechteckiger oder quadratischer Tafeln. Zum Halten der Module sin in der Praxis häufig Betonklötze auf die Dachhaut (z.B. Teerpappe, Ziegel, Kunststoff-Folie) des Flachdachs gestellt, mit denen jeweils eine Stützkonstruktion verbunden ist. Die Module sind auf die Stützkonstruktion montiert. Eine Prinzipskizze wird später anhand von Fig. 1 näher erläutert.

Aus dem deutschen Gebrauchsmuster DE 20 2006 016 382 U1 ist auch eine Lösung bekannt, bei der die Stützkonstruktion aus oberen Firstträgem, Stützträgern, Querregalen und unteren Bodenträgem besteht. Die Stützkonstruktion ist unter Zwischenlage von Bautenstützmatten auf die wasserdichte Dachhaut aufgesetzt. Sie liegt also dort nur auf, und zwar ohne Verankerung, da das Eigengewicht ein Festhalten bewirkt. Diese Konstruktionen, Betonklötze/Stützkonstruktion einerseits und Stützkonstruktion aus Trägern andererseits, lassen sich generell als "Befestigungsunterlagen" bezeichnen.

Die erste Vorgehensweise hat den Vorteil der hohen Energie-Effizienz der Module. Ausserdem lassen sich die Photovoltaikmodule, die mit einer oder zwei Glasscheiben ausgerüstet sind, in einem für die Einstrahlung günstigen Winkel zur ebenen Dachoberfläche montieren. Sie hat den einen gravierenden Nachteil. Die jeweilige Stützkonstruktion, ggf. samt Betonklötzen, ist recht schwer. Dies muss bei der Statik des Daches und des Gebäudes berücksichtigt werden. Weiterhin ist der Materialaufwand recht hoch.

Die zweite Vorgehensweise benutzt photovoltalsche Modulfollen. Diese sind mit einer Montagefolle verbunden, welche wiederum auf die Dachhaut des Flachdachs verklebt Ist. Eine Prinzipskizze wird später anhand von Fig. 2 näher erläutert. Diese Ausführung hat den Vorteil einer relativ kleinen Dachlast und niedriger Materialkosten. Die Montage ist einfach und günstig, da die beiden mit einander verbundenen, auf einer Rolle aufgewickelten Folien lediglich in einer Abrollrichtung ausgelegt zu werden brauchen und dann mit der Dachhaut durch Kleben oder Schweißen verbunden werden müssen. Aber auch bei dieser zweiten Vorgehensweise ist ein gravierender Nachteil zu sehen. Er besteht darin, dass die Modulfolien eine geringe Energie-Effizienz besitzen.

Aus der DE-A-1 03 29 184 ist bekannt, Photovoltaikmodule mit Hilfe von Klettverschlüssen auf die schräg gestellten Streben einer Unterkonstruktion zu befestigen. Das Lösen von bereits haftenden Modulen, z.B. um sie geringfügig neu auszurichten, ist schwierig.

Die DE-A-10329184 offenbart eine Anordnung bestehend aus einer Befestigungsunterlage (Haftverbinder) mit einem an ihr befestigten, eine Glasscheibe aufweisenden Photovoltaikmodul,
- wobei die Befestigungsunterlage die Form eines sich lang erstreckenden Streifens besitzt, der in einer Auf-/Abrollrichtung auf- bzw. abrollbar ist,
- wobei ihre Unterseite eine im Wesentlichen ebene Struktur aufweist, so dass sie mit einer glatten Dachhaut fest verbindbar ist,
- wobei sie auf ihrer Oberseite eine ebenfalls im Wesentlichen ebene, zur Auflage der Photovoltaikmodule geeignete Struktur aufweist,
- wobei ihre Oberseite mit mehreren in der Auf-/Abrollrichtung in einem vorgegebenen Rasterabstand angeordneten Befestigungsmitteln (Klettprinzip) versehen ist, mit deren Hilfe die Photovoltaikmodule an der Oberseite befestigt sind, und
- wobei die Befestigungsmittel integrale Bestandteile der Befestigungsunterlage sind.

Vorliegende Erfindung geht von der Erkenntnis aus, dass es wünschenswert ist, eine Lösung zu finden, bei der die erwähnten Nachteile beider Varianten nicht auftreten. Entsprechend liegt vorliegender Erfindung speziell die Aufgabe zugrunde, eine Befestigungsmöglichkeit für Photovoltaikmodule auf einem Flachdach anzugeben, bei der effiziente Photovoltaikmodule, bei denen eine Vielzahl von Photovoltaikzellen auf einer Glasscheibe angeordnet oder zwischen zwei Glasscheiben eingeschweißt sind, zum Einsatz kommen, und bei der keine schwere, die Statik beeinflussende Unterkonstruktion eingesetzt werden muss.

Diese Aufgabe wird erfindungsgemäß durch die Merkmale des Anspruchs 1 gelöst.

Diese Lösung bietet den Vorteil des Einsatzes von auf Glastechnik basierten Photovoltaikmodulen ohne einen schweren Unterbau. Die erfindungsgemäße Befestigungsunterlage (hier auch bezeichnet als flexibles Band, Montagefolie, Bahn) ist im aufgerollten Zustand leicht transportierbar, und bei der Montage ist der Befestigungsvorgang leicht handhabbar. Sie ist ja Infolge des bereits erfolgten Einbaus der Befestigungsmittel für die Montage gut vorbereitet. Die Lösung ist auf Flachdächern nicht beschränkt.

Durch den Einsatz unterschiedlich hoher Befestigungsunterlagen kann eine gewisse Veränderung des Einstrahlwinkels auf die Photovoltaikmodule erreicht werden. Damit ist es möglich, Insbesondere bei Dächern mit einer vorgegebenen Neigung, den Einstrahlwinkel in Richtung des optimalen Einstrahlwinkels hin einzustellen.

Eine vorteilhafte Ausführungsform der Erfindung sieht vor, dass zur Erzielung einer leichten Aufrollbarkeit die Oberseite der Befestigungsunterlage von parallelen, von Rand zu Rand reichenden Aussparungen quer zu der Auf-/Abrollrichtung unterbrochen ist, so dass von den Aussparungen begrenzte Segmente gebildet sind, und dass in einem Teil der Segmente jeweils das Befestigungsmittel für die Photovoltaikmodule integriert ist. Diese Vorgehensweise erlaubt es, lang gestreckte Befestigungsunterlagen bereitzustellen, ohne dass die Gefahr besteht, dass Material an den Rändern der aufgerollten Unterlage heraus quillt. Außerdem kann zwischen den Photovoltaikmodulen herein laufendes Regenwasser leicht zu den Seiten hin abgeleitet werden.

Das Rastermaß zwischen zwei benachbarten Befestigungsmitteln kann dabei z. B. 4 oder 5 Segmenten entsprechen. Natürlich sind je nach Anwendung auch andere Rastermaße verwendbar.

Eine weitere vorteilhafte Ausführungsform der Erfindung besteht darin, dass zur Erzielung einer leichten Aufrollbarkeit die Oberseite der Befestigungsunterlage mit 2 bis 10 in der Rollrichtung verlaufenden Rillen versehen ist, die entsprechend 3 bis 11 Stege bilden, und dass zumindest in einem Teil der Stege das Befestigungsmittel angeordnet Ist. Diese Ausführung bietet den Vorteil einer absolut freien Wahl des Rasterabstands, da auf keine vorgegebenen Querrillen in Form der Aussparungen Rücksicht genommen werden muss.

Schließlich sieht eine weitere besonders vorteilhafte Ausführungsform der Erfindung vor, dass zur Erzielung einer leichten Aufrollbarkeit die Oberseite der Befestigungsunterlage mit einer Vielzahl von Röhrchen versehen Ist, und dass das Befestigungsmittel, z. B. ein Gewinde, zumindest in jeweils einem der Röhrchen untergebracht ist. Ein solches vorzugsweise als Wabenmuster ausgebildetes Röhrchensystem erlaubt eine besonders leichte Aufrollbarkeit bei gleichzeitiger flexibler Montage der Befestigungsmittel.

An dieser Stelle soll darauf hingewiesen werden, dass das Befestigungsmittel nur unwesentlich über die Oberseite der Befestigungsunterlage hervorragen sollte, um eine gleichmäßige Aufrollbarkeit der Befestigungsunterlage zu einer Rolle zu gewährleisten. So wird ein Überstand von maximal der halben Dicke der Unterlage bereits als grenzwertig angesehen. Vorteilhafter ist ein Überstand von nicht mehr als 30 % der Unterlagenstärke und noch vorteilhafter von weniger als 15 % der Unterlagendicke. Am besten ist es, wenn das Befestigungsmittel komplett in die Unterlage integriert ist, so dass es beim Auf- und Abrollvorgang zu keinen Störungen kommen kann.

Das Befestigungsmittel in den Segmenten, Stegen oder Röhrchen umfasst vorzugsweise in die Befestigungsunterlage integrierte Gewindehülsen. In diese Hülsen können Klammem einschraubbar sein. Das ermöglicht auf einfache Weise den Einsatz rahmenloser Photovoltaikmodule. Hierbei ist z. B. eine Photovoltaikfolie nach Sandwich-Bauart zwischen zwei Glasscheiben untergebracht. Das Befestigungsmittel ist so auszulegen, dass es einer Sogkraft von ca. 15 kg/m² sicher widersteht. Dazu können z. B. Anker an die Gewindehülse oder jedes andere gewählte Befestigungsmittel angebracht sein.

Wie es anhand des soeben beschriebenen Ausführungsbeispiels mit der Gewindehülse als Befestigungsmittel ersichtlich ist, ist es unerheblich, ob weitere Befestigungsmittel zur letztendlichen Fixierung der Module erforderlich sind oder nicht. So ist es zum Beispiel auch möglich, die Verbindung zwischen Modul und Befestigungsunterlage als einen streng schließenden Druckknopfverschluss vorzusehen, bei dem die Öse in die Befestigungsunterlage eingearbeitet ist und bei dem das kugelförmige Teil zuvor fest mit dem Modul verbunden wurde. Die Art der Befestigung spielt keine Rolle, wichtig ist es, dass das Befestigungsmittel die erforderlichen Kräfte aufnehmen kann, also mit einem Teil fest in der Befestigungsunterlage verankert ist, und dass es möglichst bündig mit der Oberseite der Unterlage abschließt, wenn nicht sogar voll darin versenkt ist. Dabei ist das Befestigungsmittel im Sinne vorliegender Erfindung ein integraler Bestandteil der Befestigungsunterlage, also nicht von der Befestigungsunterlage zu trennen, ohne diese zu beschädigen oder zu zerstören. Das Befestigungsmittel dient entweder direkt und unmittelbar zur Befestigung des PV-Moduls, wie es z. B. ein starker industriekleber vermag, oder das Befestigungsmittel ist ein indirektes Befestigungsmittel und dient nur mittelbar zur Befestigung der Befestigungsunterlage, indem noch weitere Befestigungsmittel mit diesem zusammenwirken, wie z. B. die genannte Gewindehülse, in welche eine Modulklammer oder eine Schraube eindrehbar ist.

Die Befestigungsunterlage (Montagefolie, Bahn, Band) kann einteilig sein. Dabei können aus einer zwischen 1 cm und 3 cm dicken Kunststofffolle die Aussparungen herausgeschnitten oder -gefräst sein (einlagige Bauweise), um die dazwischen liegenden Segmente zu bilden. Es kann aber auch eine aus zwei Lagen bestehende Montagefolie in Sandwichbauweise (zweilagige Bauweise) vorgesehen sein. Hierbei ist die untere Lage an die Anforderungen der Verbindbarkeit zur Dachhaut und die obere Lage an die Anforderungen zum sicheren Halt der Photovoltaikmodule angepasst. Beide Lagen sind mit einander verbunden. In beiden Fällen sind die Montagefolien flexibel, d. h. biegbar.

Die Form der Aussparungen, der Rillen oder der Röhrchen ist relativ unkritisch. Sie muss lediglich dazu führen, dass die Unterlage z. B. auf einen Wickeldorn aufgerollt werden kann, ohne dass es zu Quetschungen im Material kommt.

Je nach der gewählten Art der Montage an die Dachhaut und des Befestigungsmittels kann es sinnvoll sein, die seitlichen Ränder der Unterlage ebenfalls mit einer Aussparung zu versehen, die es z. B. einem Schweißgerät erlaubt, sauber geführt zu werden. Bei der 2-lagigen Ausführung wäre dann die untere Lage durchgehend ohne Aussparung ausgeführt, und die obere Lage würde inselartige Erhebungen bilden, die die Segmente darstellen. Diese Ausführung wäre auch im Hinblick auf einen geringen Materialeinsatz und ein kleines Gewicht Interessant.

Im allgemeinen werden die hier in Betracht gezogenen Module praktisch parallel zur Dachoberfläche verlegt. Die fertige Konstruktion wird dazu so aussehen, dass die Befestigungsunterlage abgerollt auf der Dachhaut befestigt ist, und dass ggf. eine weitere gleichartige Befestigungsunterlage abgerollt parallel dazu auf der Dachhaut befestigt ist.

Weitere Vorteile und Ausgestaltungen der Erfindung ergeben sich aus der Beschreibung der Figuren. Gleiche und gleichartige Bauteile besitzen dieselben Bezugszeichen. Es zeigen:
- Figur 1: eine bekannte Montageart von Photovoltaik-Modulen auf einem Flachdach;
- Figur 2: eine bekannte Montageart einer Photovoltaik-Folie auf einem Flachdach;
- Figur 3: eine erfindungsgemäße Anordnung in einer Aufsicht;
- Figur 4: einen Querschnitt durch die Aufsicht nach Figur 3;
- Figur 5: die Einzelansicht eines Segments nach Figur 4 im Querschnitt;
- Figur 6: eine aufgerollte erfindungsgemäße Befestigungsunterlage oder Montagefo- lie;
- Figur 7a: eine Befestigungsunterlage mit Rillenstruktur in Draufsicht;
- Figur 7b: die Befestigungsunterlage von Figur 7a im Querschnitt X-X;
- Figur 7c: eine weiter Befestigungsunterlage mit Rillenstruktur in Seitenansicht Y-Y von rechts;
- Figur 8a: eine Befestigungsunterlage mit Wabenstruktur in Draufsicht;
- Figur 8b: die Befestigungsunterlage von Fig. 8a im Querschnitt Z-Z; und
- Figur 9: eine Konstruktion mit zwei unterschiedlich fixierten Befestigungsunterlagen.

Es war bereits erwähnt worden, dass zur Zeit zwei Vorgehensweisen zur Bestückung eines Flachdaches mit einer Sonnenkollektoranlage üblich sind, wie sie nachfolgend anhand der Figuren 1 und 2 beschrieben werden.

Wie in der ersten bekannten Vorgehensweise nach Figur 1 gezeigt ist, sind Betonklötze 1 auf die wasser- und luftdichte Dachhaut 15 eines Daches gestellt. Mit ihnen ist jeweils eine Stützkonstruktion 3 verbunden, auf denen konventionelle Photovoltaikmodule 5 in Glasbautechnik montiert sind. Diese Gesamtkonstruktion hat den Nachteil, dass sie schwer ist, und dass ihr Gewicht und ihre Anordnung bei der Statik berücksichtigt werden müssen. Weiterhin ist der Materialaufwand hoch. Demgegenüber steht der Vorteil einer hohen Effizienz, denn die Photovoltaikmodule 5 mit einer oder mit zwei Glasscheiben können in einem günstigen Winkel zur horizontalen Dachebene montiert werden.

Die zweite bekannte Vorgehensweise nach Fig. 2 sieht vor, auf die Dachhaut 15 eines Flachdaches eine Montagefolie 7 zu kleben und diese mit einer Photovoltaik-Modulfolie 9 zu verbinden. Diese Ausführung ist mit einer kleinen Dachlast und niedrigen Materialkosten verbunden. Sie weist allerdings die geringe Effizienz von Modulfollen auf. Die Montage ist einfach und günstig, da die Folien 7, 9 lediglich in einer Auf-/Abrollrichtung 11 ausgelegt zu werden brauchen und mit der Dachhaut durch Kleben oder Schweißen zu verbinden sind.

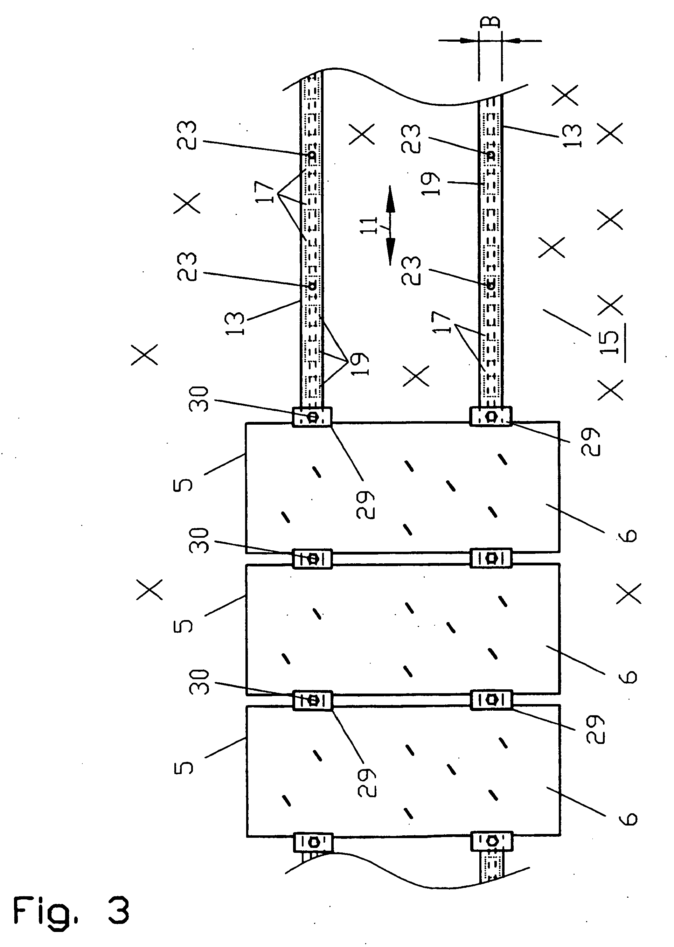

In der erfindungsgemäßen Figur 3 sind zwei parallel zueinander verlaufende lang gestreckte Befestigungsunterlagen 13 dargestellt, die jeweils auch als Montagefolie bezeichnet werden können. Sie können aus einer relativ dünnen Kunststofffolie bestehen und sind flexibel. Im linken Figurenteil von Fig. 3 sind drei Photovoltaikmodule 5 mit Glasscheibe 6 auf ihrer Oberseite auf den Unterlagen 13 nebeneinander liegend montiert, wohingegen der rechte Teil der Figur 3 einen noch nicht mit Modulen 5 bestückten Bereich einer Dachhaut 15 zeigt. Die Module 5 sind hier speziell als rahmenlose Module gewählt. Sie können auf ihrer Rückseite jeweils eine zweite Glasscheibe besitzen.

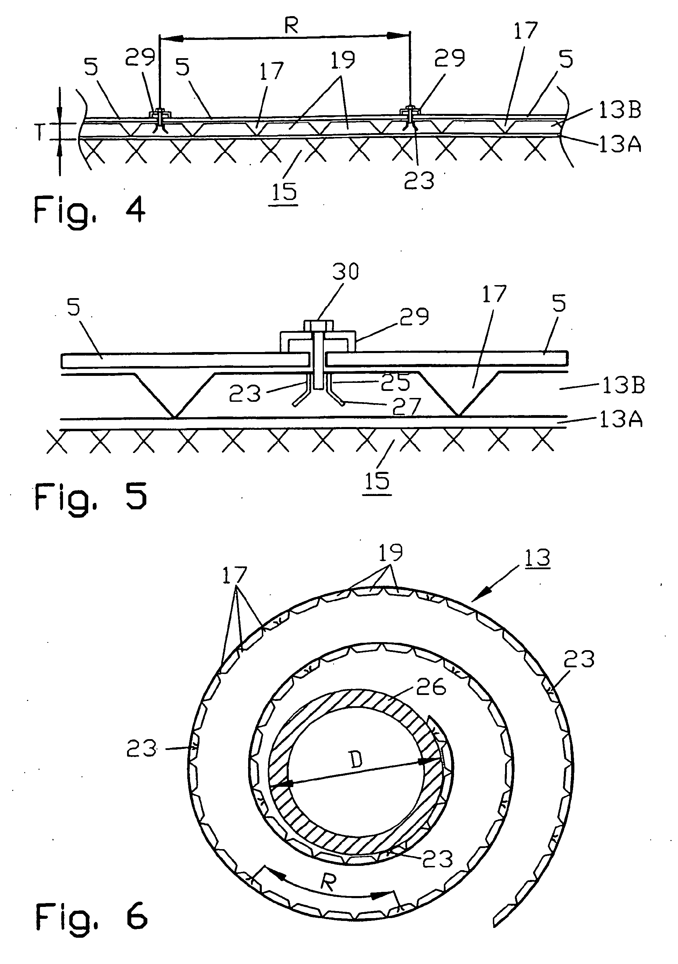

Die Befestigungsunterlagen 13 sind als lang gestreckter Streifen, Bänder oder Bahnen gefertigt, deren Breite im Bereich von 10 cm bis 20 cm liegt und die eine Länge z. B. zwischen 5 m und 12 m aufweisen. Sie können vor der Montage raumsparend aufgerollt sein (Fig. 6). Auf der Oberseite jeder Unterlage 13 sind Aussparungen 17 eingeschnitten oder eingefräst, die von Rand zu Rand des Streifens verlaufen und auf diese Weise zu einer Bildung von Segmenten 19 führen. Diese Form der Bildung der Aussparungen 17 ist bei ein- und zweilagigen Folien sinnvoll. Auf diese Weise ergeben sich Segmente 19, die quer zur Auf-/Abrollrichtung 11 liegen und deren Länge der Breite der Befestigungsunterlage 13 entspricht. Der Querschnitt der Aussparungen 17 ist hier speziell keil- oder dreleckförmig.

Bei zweilagigen Befestigungsunterlagen 13, die wie In Fig. 4 und 5 gezeigt, aus 2 Lagen 13A, 13B gebildet sind (Sandwichbauweise), dient die untere Lage 13A als eigentliche Montagefolie zur Befestigung auf der Dachhaut 15. Sie ist an die Anforderungen der Verbindung zur tatsächlich vorliegenden Dachhaut 15 (Dachpappe, Kupferdach, Kunststoff, Schicht glatter Ziegel, etc.) angepasst. Die die Segmente 19 bildende obere Lage 13B ist an die Anforderungen zum sicheren Halt der Photovoltaikmodule 5 angepasst. In der Ausführung mit einlagiger und auch mit doppellagiger Unterlage 13 besitzt die Befestigungsunterlage 13 auf ihrer Unterseite eine im wesentlichen ebene Struktur, so dass sie mit der Dachhaut 15 fest verbindbar, insbesondere verklebbar oder an ihren Rändern mit der Dachhaut 15 verschweißbar ist. Auf ihrer Oberseite besitzt sie eine im wesentlichen ebene, zur Auflage und Befestigung der Photovoltaikelemente 5 geeignete Struktur.

In dem dargestellten Beispiel der Figuren 3 - 5 kann die Dicke T der Verbund-Unterlage 13A, 13B zwischen 15 mm und 30 mm liegen. Die beiden Lagen 13A, 13B können prinzipiell aus unterschiedlichen Materialien bestehen. Und die obere Lage 13B kann aus einem Material, das mit Glasfaser verstärkt ist, bestehen.

In Fig. 4 ist ein mittlerer rechteckiger Modul 5 vollständig und sind die beiden gleichartigen benachbarten Module 5 teilweise dargestellt, allerdings ohne Glasscheibe 6. Und in Fig. 5 sind zwei benachbarte Module 5 teilweise gezeigt.

Wie aus Figur 3 und 4 in Verbindung mit Figur 3 zu erkennen ist, ist jedes vierte Segment 19 im Rasterabstand R, der der Breite M eines Moduls 5 entspricht, mit einem Befestigungsmittel 23 versehen. Dieses dient dazu, mindestens ein Photovoltaikmodul 5 randseitig direkt oder indirekt mit der Unterlage 13 zu verbinden. Anstelle von jedem vierten Segment 13 kann jedes andere geeignete Raster im Rastermaß R, z. B. 6 Segmente 19, vorgesehen sein.

Im gezeigten Ausführungsbeispiel nach Fig. 4 und 5 ist das Befestigungsmittel 23 speziell eine in die obere Lage 13B eingelassene Gewindehülse oder Gewindebüchse 25. Sie ist mit einem oder mehreren Ankerflügeln 27 verbunden (siehe Figur 5), um sie gegen ein Herausziehen aus der Unterlage 13 zu sichern. Wie es im linken Teil der Figur 3 sowie in Figur 4 und 5 dargestellt ist, ist in das Gewinde der Hülsen 25 jeweils eine Schraube 30 eingeschraubt. Sie hält eine auf der Oberfläche benachbarter Module 5 randseitig sich aufstützende Klammer 29, z. B. aus Metall, dort fest. Sie fixiert also das jeweilige Modul 5 auf der Befestigungsunterlage 13. Gemäß Fig. 4 und 5 ist die Klammer 29 hier speziell jeweils als Doppelklammer ausgebildet. Die in Fig. 5 gezeigte Klammer 29 hält somit sowohl den rechten Rand des linken Moduls 5 als auch den linken Rand des rechten Moduls 5 an der (hier beabstandet gezeichneten) Oberfläche der Unterlage 13 fest. Man kann sagen; An jedem Befestigungsmittel 23 teilen sich benachbarte (angrenzende) Module 5 eine Klammer 29 nach Fertigstellung der Verbindung.

Bevorzugt befindet sich natürlich zwischen der Unterseite der Klammer 29 und der Oberfläche des jeweiligen Moduls 5 eine Unterlage aus weichem Material, z. B. aus Gummi.

Von großer Bedeutung für eine bequeme Handhabbarkeit ist es, dass die Befestigungsmittel 23 integraler Bestandteil des Bandes 13 sind.

In der Figur 6 Ist eine aufgerollte Montage- oder Befestigungsunterlage 13 gezeigt. Aus Gründen der besseren Übersichtlichkeit sind die einzelnen Lagen der Trommel hier beabstandet eingezeichnet. Durch die Aussparungen 17 und die Segmente 19 ist eine einfache Aufrollbarkeit gewährleistet. Aus dieser Figur 6 wird deutlich, dass der Fachmann bei den Abmessungen der Aussparungen 17 und der Segmente 19 dann, wenn die Befestigungsunterlage 13 auf einen Wickeldorn 26 vorgegebenen Durchmessers D aufgewickelt werden soll, den vorgesehenen Durchmesser D zu berücksichtigen hat. Besonders deutlich wird auch noch einmal, dass die entlang des Streifens angebrachten Befestigungsmittel 23 integraler Bestandteil der Befestigungsunterlage 13 sind.

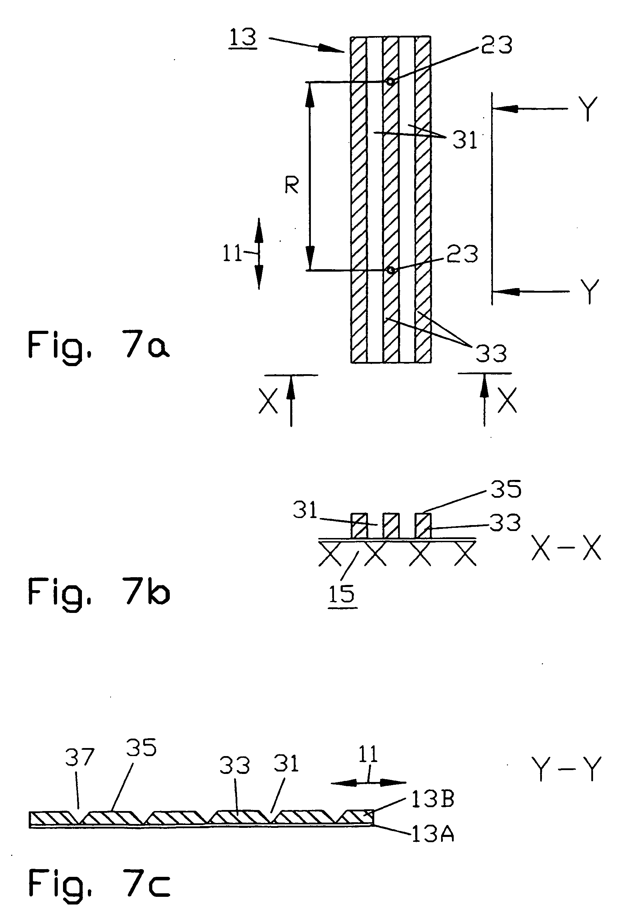

In der Figur 7a, 7b, 7c ist eine alternative Ausführungsform der Erfindung dargestellt, in welcher anstelle der quer verlaufenden Aussparungen 17 längs verlaufende Rillen 31 in der Befestigungsunterlage 13 vorgesehen sind, durch welche sich Stege 33 ergeben. Die Rillen 31 können U-förmig geformt sein, vgl. Fig. 7b. In den Stegen 33 sind die Befestigungsmittel 23 in einem vorgegebenen Rasterabstand R eingelassen. Die Stege 33 bilden an ihrer Oberseite jeweils ein Plateau 35, welches die ebene, zur Aufnahme der Photovoltaikmodule 5 geeignete Auflagefläche oder Struktur darstellt.

Wie es In Fig. 7c (Seitenansicht Y-Y) an dem äußersten rechten Steg 33 gezeigt ist, kann es sinnvoll sein, die Stege 33 zusätzlich auch mit quer verlaufenden Einschnitten 37 zu versehen, um die Aufrollbarkeit weiter zu verbessern. In der Seitenansicht Y-Y ergeben sich damit trapezförmige Querstege.

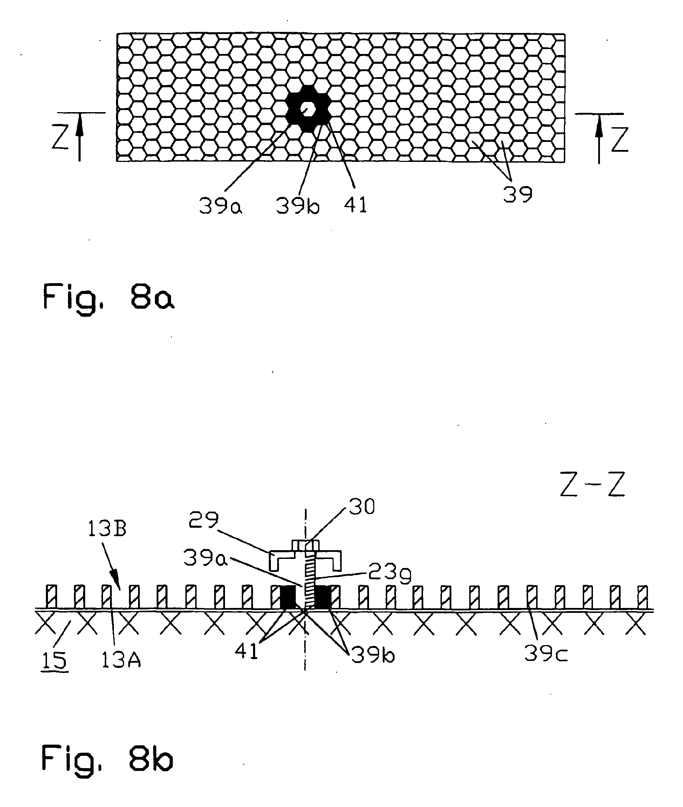

In Figur 8a, 8b ist eine Befestigungsunterlage 13 gezeigt, die anstelle der Aussparungen 17 oder der Rillen 31 mit einer Vielzahl von eng nebeneinander liegenden, unten geschlossenen Röhrchen 39 versehen ist. Die Röhrchen 39 können vorzugsweise die gezeigte Wabenstruktur besitzen. Sie können aber im Querschnitt statt sechseckig auch rund, rechteckig oder kegelstumpfartig ausgebildet sein. Die oberen freien Enden der Röhrchen 39 bilden in dieser Ausführungsform die zur Aufnahme der Photovoltaikmodule 5 geeignete ebene Auflagefläche oder Struktur. In dem gezeigten Ausführungsbeispiel ist das Befestigungsmittel 23 in einem der zentral liegenden Röhrchen 39a vorgesehen. Es kann aus einem Gewinde oder einer Gewindehülse bestehen. In das betreffende Gewinde kann (ganz entsprechend Fig. 4 und 5) eine Schraube 30 für eine Klammer 29 eingeschraubt sein, die das (hier nicht gezeigte) Modul 5 fixiert. Dabei können die an das zentrale Röhrchen 39a angrenzenden Röhrchen 39b durch eine Füllung 41 verstärkt sein, um eine mechanisch stabile Unterlage (gebildet durch die obere Schicht 13B) zu erreichen. Die restlichen Röhrchen 39c sind dann hohl ausgeführt und tragen zu einer guten Biegsamkeit und einer Material- und Gewichtsersparnis bei.

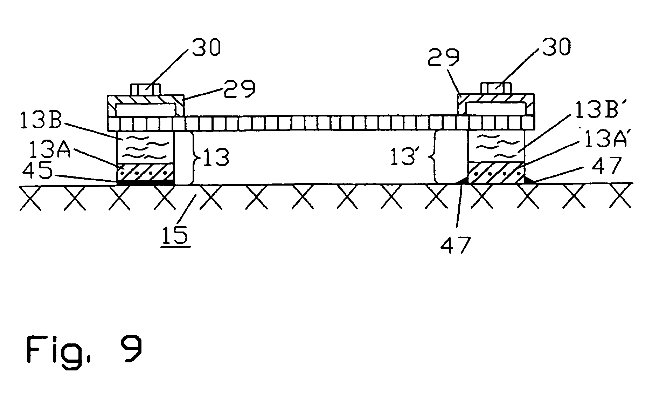

Figur 9 entspricht einem Schnitt entsprechend Figur 1. Im allgemeinen Fall wird eine erste Befestigungsunterlage 13 abgerollt auf der Dachhaut 15 befestigt sein, und eine zweite Befestigungsunterlage 13' wird dazu parallel und abgerollt ebenfalls auf der Dachhaut 15 befestigt sein. Es ist ersichtlich, dass in diesem Ausführungsbeispiel die erste Unterlage 13 mittels eines Klebemittels 45 in Form einer Klebeschicht und dass die weitere gleichartige Unterlage 13' mittels zweier Längs-Schweißnähte 47 auf der Dachhaut 15 befestigt sind. Hier ist entsprechend ausgenommen, dass jede (im Schnitt ebenfalls U-förmige) Klammer 29 zwei sich senkrecht zur Papierebene erstreckende Module 5 festhält.

### Bezugszeichenliste:

- 1: Betonklotz
- 3: Stützkonstruktion
- 5: Photovoltaikmodul
- 6: Glasscheibe
- 7: Montagefolie
- 9: Modulfolie
- 11: Auf-/Abrollrichtung
- 13: Befestigungsunterlage
- 13': weitere Befestigungsunterlage
- 13A: untere Lage
- 13B: obere Lage
- 15: Dachhaut
- 17: Aussparung
- 19: Segment
- 23: Befestigungsmittel
- 25: Gewindehülse
- 26: Wickeldorn
- 27: Ankerflügel
- 29: Klammer
- 30: Schraube
- 31: Rille
- 33: Steg
- 35: Plateau
- 37: Einschnitt
- 39: Röhrchen
- 39a: zentrales Röhrchen
- 39b: angrenzendes Röhrchen
- 39c: übriges Röhrchen
- 41: Füllung
- 45: Klebemittel
- 47: Schweißnaht
- R: Rasterabstand
- T: Dicke
- D: Trommeldurchmesser
- B: Breite einer bandförmigen Unterlage 13
- M: Breite eines Moduls 5

## Patentansprüche

1. Anordnung, bestehend aus einer Befestigungsunterlage (13) mit mehreren an Ihr befestigten, jeweils mindestens eine Glasscheibe (6) aufweisenden Photovoltaikmodulen (5),
- wobei die Befestigungsunterlage (13) die Form eines sich lang erstreckenden Streifens besitzt, der in einer Auf-/Abrollrichtung (11) auf- bzw. abrollbar ist,
- wobei ihre Unterseite eine im Wesentlichen ebene Struktur aufweist, so dass sie mit einer glatten Dachhaut (15) fest verbindbar, insbesondere verklebbar oder an ihren Rändern mit der Dachhaut (15) verschweißbar ist,
- wobei sie auf ihrer Oberseite eine ebenfalls im Wesentlichen ebene, zur Auflage der Photovoltaikmodule (5) geeignete Struktur aufweist,
- wobei ihre Oberseite mit mehreren in der Auf-/Abrollrichtung (11) in einem vorgegebenen Rasterabstand (R), welcher der Breite (M) eines der genannten Photovoltaikmodule (5) entspricht, angeordneten Befestigungsmitteln (23) versehen ist, mit deren Hilfe die Photovoltaikmodule (5) an der Oberseite befestigt sind,
- und wobei die Befestigungsmittel (23) integrale Bestandteile der Befestigungsunterlage (13) sind.

2. Anordnung nach Anspruch 1, **dadurch gekennzeichnet, dass** die Befestigungsunterlage (13) zur Erzielung der Aufrollbarkeit ihre Oberseite von parallelen, von Rand zu Rand reichenden Aussparungen (17) quer zu der Auf-/Abrollrichtung (11) unterbrochen ist, so dass von den Aussparungen (17) begrenzte Segmente (19) gebildet sind, und dass In einem Teil der Segmente (19) jeweils die Befestigungsmittel (23) für die Photovoltaikmodule (5) integriert sind.

3. Anordnung nach Anspruch 1, **dadurch gekennzeichnet, dass** die Befestigungsunterlage (13) zur Erzielung der Aufrollbarkeit ihre Oberseite mit 2 bis 10 in der Rollrichtung (11) verlaufenden Rillen (31) versehen ist, die entsprechend 3 bis 11 Stege (33) bilden, und dass zumindest in einem Teil der Stege (33) die Befestigungsmittel (23) angeordnet sind.

4. Anordnung nach Anspruch 1, **dadurch gekennzeichnet, dass** die Befestigungsunterlage (13) zur Erzielung der Aufrollbarkeit ihre Oberseite mit einer Vielzahl von Röhrchen (39a, 39b, 39c) versehen ist, und dass die Befestigungsmittel (23) zumindest In jeweils einem der Röhrchen (39a) untergebracht sind.

5. Anordnung nach Anspruch 4, **dadurch gekennzeichnet, dass** die Röhrchen (39a, 39b, 39c) im Querschnitt ein sechskantiges Wabenmuster ausweisen.

6. Anordnung nach einem der Ansprüche 1 bis 5, **dadurch gekennzeichnet, dass** der Streifen eine Breite zwischen 100 mm und 200 mm aufweist.

7. Anordnung nach einem der Ansprüche 1 bis 6, **dadurch gekennzeichnet, dass** die Befestigungsunterlage (13) abgerollt eine Länge zwischen 5 m und 12 m aufweist.

8. Anordnung nach einem der Ansprüche 1 bis 7, **dadurch gekennzeichnet, dass** das regelmäßige Raster (R) zwischen 60 cm und 65 cm, insbesondere 62,5 cm, beträgt.

9. Anordnung nach einem der Ansprüche 2 bis 5, **dadurch gekennzeichnet, dass** die Befestigungsmittel (23) ein in eines der Segmente (19) bzw. in einen der Stege (33) bzw. in eines der Röhrchen (39) eingelassenes Fixierelement, wie z. B. eine Gewindehülse (25), eine Klammer, eine Feder, einen Clip, ein Gewinde (23g) aufweisen.

10. Anordnung nach einem der Ansprüche 2 bis 5, **dadurch gekennzeichnet, dass** die Befestigungsmittel (23) durch die Formgebung eines der Segmente (19) bzw. einem der Stege (33) bzw. einem der Röhrchen (39) gebildet sind, wie z. B. durch eine Hinterschneidung, eine Hakenbildung, eine Schwalbenschwanzöffnung.

11. Anordnung nach einem der Ansprüche 2 bis 5 oder 9 bis 10, **gekennzeichnet durch** eine 2-lagige Sandwichbauweise der Befestigungsunterlage (13), deren untere durchgehende Lage (13A) mit der Dachhaut (15) verbindbar Ist und deren obere Lage (13B) zur Bildung der Segmente (19) bzw. der Stege (33) bzw. der Röhrchen (39) dient.

12. Anordnung nach einem der Ansprüche 2 oder 3, **dadurch gekennzeichnet, dass** die Aussparungen (17) bzw. die Rillen (31) jeweils eine Nut mit trapezförmigem oder dreieckförmigem Querschnitt bilden.

13. Anordnung nach einem der Ansprüche 2 bis 5, **dadurch gekennzeichnet, dass** die Befestigungsmittel (23) jeweils in der Mitte einer der Segmente (19) bzw. im mittleren Steg (33) bzw. in einem mittig liegenden Röhrchen (39a) angeordnet sind.

14. Installation mit einer Anordnung nach einem der Ansprüche 1 bis 13, **dadurch gekennzeichnet, dass** die Befestigungsunterlage (13) abgerollt auf einer Dachhaut (15) befestigt ist, und dass ggf. eine weitere gleichartige Befestigungsunterlage (13') abgerollt parallel dazu auf der Dachhaut (15) befestigt ist.

15. Installation mit einer Anordnung nach Anspruch 14, **dadurch gekennzeichnet, dass** die Befestigungsunterlage (13) mittels eines Klebemittels (45) oder mittels einer Schweißnaht (47) auf der Dachhaut (15) befestigt ist.

## Claims

1. Arrangement consisting of an attachment underlay (13) with a plurality of photovoltaic modules (5) attached thereto, each photovoltaic module comprising at least one glass panel (6),
- wherein the attachment underlay (13) has the shape of an elongate strip which can be rolled and unrolled in a rolling/unrolling direction (11) respectively,
- wherein the underside of said attachment underlay has a substantially planar surface so that it can be connected rigidly to a smooth roof covering (15), in particular can be adhered or welded at its edges to the roof covering (15),
- wherein said attachment underlay comprises, on its upper face, a structure which is likewise substantially planar and is suitable for supporting the photovoltaic modules (5),
- wherein the upper face of said attachment underlay is provided with a plurality of attachment means (23) arranged in the rolling/unrolling direction (11) at a predefined grid spacing (R) which corresponds to the width (M) of one of the aforementioned photovoltaic modules (5), the photovoltaic module (5) being attached to the upper face with the aid of said attachment means,
- and wherein the attachment means (23) are integral components of the attachment underlay (13).

2. Arrangement according to claim 1, **characterised in that**, so as to be able to roll up the attachment underlay (13), the upper face thereof is interrupted by parallel recesses (17) reaching from edge to edge and oriented transverse to the rolling/unrolling direction (11) so that segments (19) defined by the recesses (17) are formed, and **in that** the attachment means (23) for the photovoltaic modules (5) are integrated in part of each of the segments (19).

3. Arrangement according to claim 1, **characterised in that**, so as to be able to roll up the attachment underlay (13), the upper face thereof is provided with 2 to 10 channels (31) which extend in the rolling direction (11) and which accordingly form 3 to 11 ribs (33), and **in that** the attachment means (23) are arranged in at least some of the ribs (33).

4. Arrangement according to claim 1, **characterised in that**, so as to be able to roll up the attachment underlay (13), the upper face thereof is provided with a plurality of tubes (39a, 39b, 39c), and **in that** the attachment means (23) are housed in at least one of the tubes (39a).

5. Arrangement according to claim 4, **characterised in that** the tubes (39a, 39b, 39c) form a hexagonal honeycomb pattern in cross-section.

6. Arrangement according to any one of claims 1 to 5, **characterised in that** the strip is between 100 mm and 200 mm wide.

7. Arrangement according to any one of claims 1 to 6, **characterised in that** the attachment underlay (13) is between 5 m and 12 m long when unrolled.

8. Arrangement according to any one of claims 1 to 7, **characterised in that** the regular grid (R) is between 60 cm and 65 cm, in particular 62.5 cm.

9. Arrangement according to any one of claims 2 to 5, **characterised in that** the attachment means (23) comprise a fixing element, such as a threaded sleeve (25), a clamp, a spring, a clip or a thread (23g), which is recessed in one of the segments (19), or in one of the ribs (33), or in one of the tubes (39).

10. Arrangement according to any one of claims 2 to 5, **characterised in that** the attachment means (23) are formed by the shaping of one of the segments (19) or of one of the ribs (33), or of one of the tubes (39), for example by an undercut, a hook, or a dovetail opening.

11. Arrangement according to any one of claims 2 to 5 or 9 to 10, **characterised by** a two-layer sandwich structure of the attachment underlay (13), the lower continuous layer (13A) of which can be connected to the roof covering (15), and the upper layer (13B) of which forms the segments (19), or the ribs (33), or the tubes (39).

12. Arrangement according to either claim 2 or claim 3, **characterised in that** the recesses (17) or the channels (31) each form a groove having a trapezoidal or triangular cross-section.

13. Arrangement according to any one of claims 2 to 5, **characterised in that** the attachment means (23) are each arranged in the centre of one of the segments (19), or in the central rib (33), or in a central tube (39a).

14. Installation having an arrangement according to any one of claims 1 to 13, **characterised in that** the unrolled attachment underlay (13) is attached to a roof covering (15), and **in that** a further, similar attachment underlay (13') unrolled parallel thereto is optionally attached to the roof covering (15).

15. Installation having an arrangement according to claim 14, **characterised in that** the attachment underlay (13) is attached to the roof covering (15) by means of an adhesive (45) or by means of a welded joint (47).

## Revendications

1. Agencement, constitué d'un support de base de fixation (13) avec plusieurs modules photovoltaïques (5), qui y sont fixés et présentent chacun au moins une vitre de verre (6),
- le support de base de fixation (13) possédant la forme d'un ruban, qui s'étend en longueur et peut être enroulé/déroulé dans une direction d'enroulement/déroulement (11),
- son côté inférieur présentant une structure sensiblement plane de sorte qu'il peut être relié de manière fixe à une couverture de toit (15) lisse, notamment être collé ou être soudé au niveau de ses bords à la couverture de toit (15),
- son côté supérieur présentant également une structure sensiblement plane, adaptée à l'appui des modules photovoltaïques (5),
- son côté supérieur étant par ailleurs pourvu de plusieurs moyens de fixation (23) qui, dans la direction d'enroulement/déroulement (11), sont agencés selon une distance d'espacement régulière (R), prédéterminée, correspondant à la largeur (M) de l'un des modules photovoltaïques (5) cités, et à l'aide desquels les modules photovoltaïques (5) sont fixés sur le côté supérieur,
- et les moyens de fixation (23) faisant partie intégrante du support de base de fixation (13).

2. Agencement selon la revendication 1, **caractérisé en ce que** le support de base de fixation (13), en vue d'obtenir l'aptitude à l'enroulement, est interrompu sur son côté supérieur, par des évidements (17) qui s'étendent de bord à bord, transversalement par rapport à la direction d'enroulement/déroulement (11), de sorte que sont formés des segments (19) délimités par les évidements (17), et **en ce que** dans une partie des segments (19) sont intégrés respectivement les moyens de fixation (23) pour les modules photovoltaïques (5).

3. Agencement selon la revendication 1, **caractérisé en ce que** le support de base de fixation (13), en vue d'obtenir l'aptitude à l'enroulement, est pourvu sur son côté supérieur, de 2 à 10 stries (31) qui s'étendent dans la direction d'enroulement (11) et forment de manière correspondante, 3 à 11 nervures (33), et **en ce que** dans au moins une partie des nervures (33) sont agencés les moyens de fixation (23).

4. Agencement selon la revendication 1, **caractérisé en ce que** le support de base de fixation (13), en vue d'obtenir l'aptitude à l'enroulement, est pourvu sur son côté supérieur, d'un grand nombre de petits tubes (39a, 39b, 39c), et **en ce que** les moyens de fixation (23) sont logés dans respectivement au moins l'un des petits tubes (39a).

5. Agencement selon la revendication 4, **caractérisé en ce que** les petits tubes (39a, 39b, 39c) présentent, en section transversale, une forme hexagonale réalisant une structure en nid d'abeille.

6. Agencement selon l'une des revendications 1 à 5, **caractérisé en ce que** le ruban présente une largeur comprise entre 100 mm et 200 mm.

7. Agencement selon l'une des revendications 1 à 6, **caractérisé en ce que** le support de base de fixation (13) présente, lorsqu'il est déroulé, une longueur comprise entre 5 m et 12 m.

8. Agencement selon l'une des revendications 1 à 7, **caractérisé en ce que** la distance d'espacement régulière (R) est comprise entre 60 cm et 65 cm, et vaut de préférence 62,5 cm.

9. Agencement selon l'une des revendications 2 à 5, **caractérisé en ce que** les moyens de fixation (23) présentent un élément de fixation, qui est noyé dans l'un des segments (19), ou l'une des nervures (33) ou l'un des petits tubes (39), et qui est par exemple une douille taraudée (25), une agrafe, un ressort, un clip ou un taraudage (23g).

10. Agencement selon l'une des revendications 2 à 5, **caractérisé en ce que** les moyens de fixation (23) sont formés par la conformation de l'un des segments (19), ou de l'une des nervures (33) ou de l'un des petits tubes (39), en étant par exemple formés par une contre-dépouille, une formation de crochet, ou une ouverture en queue d'aronde.

11. Agencement selon l'une des revendications 2 à 5 ou 9 à 10, **caractérisé par** un mode de construction en sandwich à deux couches du support de base de fixation (13), dont la couche inférieure continue (13A) peut être reliée à la couverture de toit (15), et dont la couche supérieure (13B) sert à la formation des segments (19), ou des nervures (33) ou des petits tubes (39).

12. Agencement selon l'une des revendications 2 ou 3, **caractérisé en ce que** les évidements (17) ou les stries (31) forment respectivement une rainure à section transversale de forme trapézoïdale ou de forme triangulaire.

13. Agencement selon l'une des revendications 2 à 5, **caractérisé en ce que** les moyens de fixation (23) sont agencés respectivement au centre de l'un des segments (19), ou dans la nervure centrale (33) ou bien dans un petit tube (39a) en position centrale.

14. Installation comprenant un agencement selon l'une des revendications 1 à 13, **caractérisée en ce que** le support de base de fixation (13) est déroulé et fixé sur une couverture de toit (15), et **en ce que**, le cas échéant, un autre support de base de fixation (13') de même type est déroulé et fixé de manière parallèle sur la couverture de toit (15).

15. Installation comprenant un agencement, selon la revendication 14, **caractérisée en ce que** le support de base de fixation (13) est fixé sur la couverture de toit (15) au moyen d'une colle (45) ou au moyen d'un joint soudé (47).
